# FASCICULE DE BREVET EUROPEEN

(11) **EP 0 658 316 B1**
(45) Date de publication et mention de la délivrance du brevet: **02.06.1999**
(21) Numéro de dépôt: 94102007.5
(22) Date de dépôt: 10.02.1994
(51) Int. Cl.: A23L 3/3472, A23L 1/221, C11B 5/00

(54) **Procédé de protection d'une matière grasse contre l'oxydation**
Verfahren zum Schützen eines Fettmaterials gegen Oxydation
Method for protecting a fatty material against oxidization

(30) Priorité: 17.12.1993 EP 93120358
(43) Date de publication de la demande: 21.06.1995
(73) Titulaire: SOCIETE DES PRODUITS NESTLE S.A., 1800 Vevey (CH)
(72) Inventeur: Aeschbach, Robert, CH-1800 Vevey (CH); Wille, Hans-Juergen, CH-1844 Villeneuve (CH)
(74) Mandataire: Archambault, Jean

(56) Documents cités:
- GB-A- 451 340
- US-A- 2 115 073
- US-A- 3 732 111
- PATENT ABSTRACTS OF JAPAN vol. 008, no. 034 (C-210)15 Février 1984 & JP-A-58 194 976 (HASEGAWA KORYO KK) 14 Novembre 1983

## Description

L'invention concerne un procédé de protection d'une matière grasse contre l'oxydation, dans lequel on met en présence directement la matière grasse à protéger et une matière végétale contenant des antioxydants phénoliques.

Dans l'industrie alimentaire, on utilise des antioxydants dont le but est de retarder la dégradation oxydative des corps gras par inhibition de la formation de radicaux libres. Les antioxydants usuels de qualité alimentaire peuvent être d'origine synthétique, par exemple le butylhydroxyanisol (BHA), le butylhydroxytoluène (BHT), mais ceux-ci sont de plus en plus contestés dans les législations alimentaires ou, de préférence naturelle, principalement d'origine végétale provenant des extraits de plantes. Le romarin est actuellement la matière première la plus utilisée dans ce but.

Différentes méthodes ont été appliquées pour extraire les principes antioxydants des matières végétales et les mettre sous forme de poudre ou de liquide plus ou moins visqueux. Parmi les méthodes conduisant à un antioxydant sous forme de poudre, on a proposé, par exemple selon EP-A-0307626, une extraction en deux étapes impliquant l'emploi successif d'hexane, puis d'éthanol.

Comme exemple de procédé conduisant à un antioxydant sous forme liquide, EP-A-0507064 décrit un procédé de solubilisation d'antioxydants d'origine végétale dans un triglycéride à chaîne moyenne (MCT) par l'intermédiaire de solvants. Un tel triglycéride est liquide sur une vaste plage de températures, résiste à la dégradation oxydative et a un bon potentiel de dissolution pour les antioxydants d'origine végétale.

US-A-3732111 a trait à un procédé d'extraction de principes antioxydants d'une matière végétale telle que la sauge ou le romarin par mascération de la matière végétale grossièrement moulue sous faible agitation à chaud (80 à 180° C) dans une huile végétale ou animale, de manière à en extraire les composants antioxydants liposolubles, séparation de l'huile contenant l'extrait antioxydant et des particules végétales épuisées et désodorisation de l'huile par entraînement à la vapeur sous vide. La matière végétale épuisée peut être séparée de l'huile par centrifugation suivie d'une filtration (colonne 3, ligne 69 à colonne 4, ligne 2). On notera que le rapport pondéral huile:matière végétale est 4:1 à 20:1 (colonne 3, lignes 34-36).

JP-A-58194976 concerne l'extraction d'antioxydants dans un récipient fermé en présence de solvants organiques non polaires, par exemple le n-pentane ou polaires, par exemple le méthanol, à température de 90 à 180° C et le cas échéant sous agitation et sous pression, de 0,2 à 100 kg/cm2 avec introduction d'un gaz inerte. Le récipient agit comme un autoclave et le rôle de la pression de gaz à l'intérieur du récipient est probablement de raccourcir la durée de l'extraction. Après extraction, les particules épuisées sont séparées de la solution constituant l'extrait, sans doute par filtration. Il n'y a aucune indication concernant une utilisation éventuelle d'une huile à protéger en tant que solvant.

Le but de la présente invention est de mettre des antioxydants d'origine végétale en solution directement dans une matière grasse à protéger par une extraction mécanique simple en évitant la mise en oeuvre de solvants qu'il faudrait éliminer.

On a constaté qu'un simple pressage soit avec une presse à vis, soit avec une presse hydraulique dans certaines conditions de pression suffisait pour extraire une quantité importante d'antioxydants dans une matière grasse destinée à être protégée. Ceci est surprenant parce que les procédés connus utilisent des solvants polaires et des moyens plus compliqués.

L'invention concerne donc un procédé de protection d'une matière grasse contre l'oxydation, dans lequel on met en présence directement la matière grasse à protéger et une matière végétale contenant des antioxydants phénoliques, à une température élevée, caractérisé par le fait que le rapport pondéral matière grasse / matière végétale est 0,5 à 2,5 et que l'on presse physiquement le mélange à chaud à une pression supérieure ou égale à 40 bar.

Le cas échéant, on filtre ou on clarifie ensuite l'extrait sortant de la presse pour le débarrasser des solides en suspension.

Comme matière végétale de départ, on peut utiliser toute matière végétale contenant des antioxydants phénoliques, par exemple le romarin, la sauge, le thym, l'origan, la sariette, les pellicules de fèves de cacao, les pellicules de tomate seule ou en mélange. Parmi ces matières premières, le romarin et la sauge constituent des matières de choix, le romarin en particulier, car il contient les antioxydants acide carnosique et carnosol qui sont inodores, incolores et pratiquement insipides.

La matière première peut être fraiche, entière ou moulue plus ou moins finement. Elle peut être strippée à la vapeur pour en éliminer la majeure partie des principes odorants qui ne sont pas souhaités pour certaines applications dans lesquelles on désire que l'antioxydant soit aussi neutre que possible. Dans d'autres cas, on désire conserver dans l'antioxydant liquide une partie au moins des principes odorants des épices et la matière de départ n'est alors pas strippée. Elle se présente de préférence sous forme séchée, qu'elle soit moulue ou non, strippée ou non.

La matière grasse à protéger peut être choisie parmi les graisses d'origine animale ou végétale, sensibles à l'oxydation et contenant des acides gras insaturés. On peut citer par exemple la graisse de poule, le saindoux et la graisse de palme, plutôt apolaires.

Le mélange de la matière première végétale et de la matière grasse, de préférence préalablement fondue, par exemple à 60-80°C s'effectue à température élevée, de préférence à 90-120°C. Ce prétraitement peut avoir lieu par exemple dans un mélangeur sous forte agitation, dans un échangeur à surface raclée ou dans un injecteur de vapeur UHT, à la vapeur surchauffée. Sa durée peut être de préférence de 60 à 90 min dans un mélangeur pour arriver à une extraction convenable des antioxydants. Dans les cas d'un échangeur à surface râclée et d'un injecteur de vapeur, la durée est de préférence de quelques secondes à quelques minutes.

On a constaté qu'il était avantageux d'effectuer le prétraitement en présence d'eau, en ajoutant au mélange, de préférence 10 à 20% en poids d'eau par rapport à la matière végétale de manière à augmenter la quantité d'antioxydant extrait.

Par ailleurs, un prétraitement enzymatique de la matière première permet dans le cas du romarin par exemple, une amélioration du rendement d'extraction de l'ordre de 20 à 30%. Pour ce faire, on incube la matière végétale, par exemple les feuilles de romarin, avec 1% en poids d'une glucanase en milieu aqueux, par exemple à environ 40°C pendant environ 4 h sous agitation, puis on filtre ou centrifuge la suspension et on sèche la matière végétale ainsi traitée.

Le rapport pondéral matière grasse/matière végétale est choisi pour obtenir une concentration acceptable d'antioxydant avec un rendement élevé. Il est de 0,5 à 2,5.

Le prétraitement est ensuite suivi d'une extraction sous forte pression de la suspension de matière végétale dans la matière grasse. On peut utiliser dans ce but une presse à vis ou à piston équipée dans ce dernier cas d'un dispositif de filtration en sortie.

Lorsque l'on met en oeuvre une presse à vis, il faut veiller à ce que le mélange de départ contienne une quantité minimale de matière végétale pour arriver à une consistance de la dispersion susceptible d'assurer une perte de charge suffisante pour constituer la pression, de manière à éviter que la matière grasse, trop diluée, ne sorte sans effet d'extraction. Après l'extraction, il faut encore traiter l'huile brute extraite de manière à en éliminer les résidus de matière végétale en suspension, par exemple par filtration ou centrifugation.

Lorsque l'on utilise une presse à piston, la pression appliquée est progressivement augmentée, par exemple par palliers jusqu'à une valeur supérieure ou égale à 40 bar et maintenue pendant une ou plusieurs heure(s).

Dans ce cas, il faut procéder rapidement au pressage et à la filtration afin d'éviter un refroidissement au cours duquel la matière; grasse pourrait se figer. Afin de diminuer ce risque, on peut de préférence chauffer le corps de presse.

Dans le but d'augmenter encore la quantité d'antioxydant incorporé et de mieux utiliser la matière première végétale, on peut recommencer l'extraction en recyclant un premier extrait d'antioxydant dans la matière grasse préchauffée en le mettant en présence d'une nouvelle charge de matière végétale. On peut ainsi obtenir une matière grasse contenant jusqu'à 7% en poids d'antioxydant.

Suivant le type de matière végétale mise en oeuvre, par exemple une épice, et le type d'utilisation envisagée, il peut être nécessaire de décolorer et de désodoriser la matière grasse contenant l'antioxydant. Pour décolorer, on mélange la matière grasse avec du charbon actif ou de la terre décolorante, on chauffe et on filtre. Les substances responsables de la couleur sont alors retenues sur l'adsorbant.

Pour désodoriser, on effectue de préférence une distillation sous vide, par exemple à contre-courant en film tombant ou en couche mince avec de la vapeur surchauffée.

L'invention concerne également l'utilisation d'une matière grasse traitée comme précédemment pour protéger un aliment de l'oxydation. A cet égard, on peut l'utiliser sous forme concentrée telle qu'elle sort de l'extraction et la mélanger à la matière grasse à stabiliser et donc diluer le concentrat en adaptant la teneur en antioxydant au but de la protection.

On peut également utiliser la matière grasse protégée, par exemple sous forme d'un concentrat précédent, pour protéger la phase grasse d'un aliment, par exemple d'une viande, d'une masse de bouillon, d'une sauce, d'un potage ou d'une crème. Dans ce cas, on mélange le concentrat avec la partie restante de la matière grasse de manière à obtenir la teneur en matière grasse désirée dictée par la recette.

Les exemples ci-après illustrent l'invention. Dans ceux-ci: les parties et pourcentages sont pondéraux, sauf indication contraire.

### Exemple 1

On mélange 3 kg de feuilles de romarin hachées en présence de 300 g d'eau déminéralisée avec 1,5 kg de graisse de poule préalablement chauffée à 60°C. Après traitement pendant 1 h à 100°C dans un mélangeur Lödige (R), on presse le mélange dans une presse Komet (R) avec une vis R8L dont la tête est chauffée à 140°C et dont l'orifice de sortie a un diamètre de 6 mm. On sépare 2,9 kg d'un gâteau et on recueille 1,1 kg de graisse liquide brute. On chauffe cette graisse brute à 60-80°C, puis on la clarifie sur une centrifugeuse Padberg (R) opérant à 14.000 t/min. On obtient ainsi 0,8 kg de graisse de poule stabilisée. Le rendement en graisse clarifiée est 53,3 % (relativement à la graisse de poule mise en oeuvre).

### Exemple 2

On procède comme à l'exemple 1, sauf que l'on mélange 500 g de saindoux préalablement chauffé à 80°C avec 1 kg de feuilles de sauge hachées en présence de 200 g d'eau déminéralisée. On obtient alors une graisse fondue brute contenant 1,59 % d'antioxydant (analysé en tant que somme du carnosol et de l'acide carnosique par chromoatographie liquide haute performance, HPLC). Le rendement par rapport à la matière grasse engagée est 57,8%.

### Exemple 3

En procédant comme à l'exemple 2, mais à la différence que a graisse à protéger est la graisse de poule, on obtient une graisse fondue brute avec un rendement de 87,4% par rapport à la graisse de poule mise en oeuvre et contenant 1,52% d'antioxydant.

### Exemples 4-6

4. On humidifie 1 kg de feuilles de romarin hachées et strippées à la vapeur avec 200 g d'eau, puis on brasse le tout dans un mélangeur Lödige (R) avec chauffage à la vapeur de la double paroi à 120°C pendant 20 min. On ajoute 500 g de graisse de poule préalablement chauffée à 60°C, puis on maintient le tout à 100°C pendant 60 min sous agitation dans le mélangeur. Immédiatement après le prétraitement, on effectue le pressage avec de la graisse encore fondue à 500 b dans une presse à piston Carver (R) équipée d'une cage filtrante pendant 60 min et on recueille une graisse brute contenant 1,11% d'antioxydant avec un rendement de 33,7% par rapport à la matière grasse engagée.

5. En procédant comme à l'exemple 4 ci-dessus mais avec 1 kg de graisse de poule, on recueille une graisse brute contenant 0,77% d'antioxydant avec un rendement de 69% par rapport à la matière grasse engagée.

6. En procédant comme à l'exemple 4 ci-dessus mais avec 2 kg de graisse de poule, on recueille une graisse brute contenant 0,5% d'antioxydant avec un rendement de 80,9% par rapport à la matière grasse engagée.

### Exemple 7

On procède comme à l'exemple 4 ci-dessus dans les mêmes proportions matière végétale/matière grasse, mais avec de la graisse de palme. On recueille une graisse brute contenant 1,21% d'antioxydant avec un rendement de 34% par rapport à la matière grasse engagée.

### Exemple 8

On traite 1 kg de feuilles sèches de sauge non strippées avec 200 ml d'eau déminéralisée sous agitation dans un mélangeur dont la double paroi est chauffée à 120°C pendant 20 min, et ensuite avec 500g de graisse de poule ayant été préalablement chauffée à 60°C, pendant 1 h à 100°C, puis on presse à chaud avec une presse à piston Carver (R) équipée d'une cage filtrante. On obtient ainsi une graisse brute contenant 1,31% d'antioxydant avec un rendement de 38,3% par rapport à la matière grasse engagée.

### Exemple 9

On procède comme à l'exemple 8 ci-dessus, mis à part le fait que la matière grasse traitée est le saindoux. On obtient ainsi une graisse brute contenant 1,31% d'antioxydant avec un rendement de 38,3% par rapport à la matière grasse engagée.

### Exemple 10

Pour protéger un lot de matière grasse destinée à être utilisée dans un aliment, on ajoute à ce lot de matière grasse non traitée une portion de matière grasse stabilisée sous forme de concentrat en une proportion de 1 partie de concentrat pour 500 parties, respectivement 100 parties de matière grasse non traitée. La matière grasse traitée que l'on utilise est de préférence de la même sorte que la matière grasse non traitée.

On mesure le facteur de protection en utilisant le test d'oxydation accéléré Rancimat (R) comme indiqué dans l'exemple 13 de EP-A- 0326829, mais à 110°C. On détermine le temps d'induction de la matière grasse protégée par la portion de matière grasse stabilisée par le procédé selon l'invention en ajoutant 0,2%, respectivement 1% de matière grasse stabilisée à la matière grasse à protéger et on fait le rapport de ce temps sur le temps d'induction de référence de la matière grasse non stabilisée, ce qui donne l'indice d'antioxydant. Les résultats sont indiqués dans le tableau I ci-après.

**Tableau I**

| Exemple, matière grasse, quantité (%) | | Indice d'antioxydant |
|---|---|---|
| 2, Saindoux, | 0,2 | 4 |
| 3, Graisse de poule, | 0,2 | 3,4 |
| 4, Graisse de poule, | 0,2 | 6,1 |
| 5, Graisse de poule, | 0,2 | 3,9 |
| 6, Graisse de poule, | 0,2 | 3 |
| 7, Graisse de palme, | 1 | 1,7 |
| 8, Graisse de poule, | 0,2 | 3,5 |
| 9, Saindoux, | 0,2 | 3,7 |

## Revendications

1. Procédé de protection d'une matière grasse contre l'oxydation, dans lequel on met en présence directement la matière grasse à protéger et une matière végétale contenant des antioxydants phénoliques à une température élevée, caractérisé par le fait que le rapport pondéral matière grasse / matière végétale est 0,5 à 2,5 et que l'on presse physiquement le métange à chaud à une pression supérieure ou égale à 40 bar.

2. Procédé selon la revendication 1, caractérisé par le fait que l'on utilise comme matière végétale de départ contenant des antioxydants phénoliques, romarin ou la sauge.

3. Procédé selon la revendication 1, caractérisé par le fait que la matière grasse à protéger est choisie parmi les graisses d'origine animale ou végétale sensibles à l'oxydation et contenant des acides gras insaturés, notamment la graisse de poule, le saindoux et la graisse de palme.

4. Procédé selon la revendication 1, caractérisé par le fait que le mélange de la matière première végétale et de la matière grasse à protéger a lieu à température élevée, de 90 à 120°C.

5. Procédé selon la revendication 4, caractérisé par le fait que l'on effectue le mélange en présence d'eau, en ajoutant au mélange, 10 à 20% en poids d'eau par rapport à la matière végétale.

6. Procédé selon la revendication 1, caractérisé par le fait que l'on effectue un prétraitement enzymatique de la matière végétale en l'incubant avec une glucanase en milieu aqueux, puis on filtre ou centrifuge la suspension et on sèche la matière végétale ainsi traitée.

7. Procédé selon la revendication 1, caractérisé par le fait que le pressage est effectué à chaud dans une presse à piston équipée d'une cage filtrante permettant le pressage et la filtration en une seule opération

8. Procédé selon la revendication 1, caractérisé par le fait que le pressage est effectué dans une presse à ris et qu'après le pressage, on clarifie l'huile brute extraite de manière à en éliminer les résidus de matière végétale en suspension, par filtration ou centrifugation.

9. Utilisation d'une matière grasse traitée par le procédé selon l'une des revendications 1 à 9 en tant qu'extrait antioxydant pour protéger une matière grasse non traitée de l'oxydation, dans laquelle l'extrait contient 0,5 à 7% en poids d'antioxydant et le dit extrait est ajouté à raison de 0,2 à 1% en poids à la matière grasse à protéger.

10. Utilisation selon la revendication 9, dans laquelle la matière grasse constitutive de l'extrait est la même que la matière grasse à protéger.

## Claims

1. Process for protecting a fat from oxidation, in which the fat to be protected is placed directly in contact with a vegetable substance containing phenolic antioxidants at an elevated temperature, characterised in that the weight ratio of fat vegetable substance is 0.5 to 2.5 and that the mixture is physically hot pressed at a pressure of greater than or equal to 40 bar.

2. Process according to claim 1, characterised in that rosemary or sage is used as the starting vegetable substance containing phenolic antioxidants.

3. Process according to claim 1, characterised in that the fat to be protected is selected from among animal or vegetable fats susceptible to oxidation and containing unsaturated fatty acids, in particular chicken fat, lard and palm butter.

4. Process according to claim 1, characterised in that mixing of the vegetable raw material and the fat to be protected proceeds at an elevated temperature of 90 to 120°C.

5. Process according to claim 4, characterised in that mixing is performed in the presence of water by adding 10 to 20 wt.% of water, relative to the vegetable substance, to the mixture.

6. Process according to claim 1, characterised in that the vegetable substance is subjected to enzymatic pretreatment by incubating it with a glucanase in an aqueous medium, then the suspension is filtered or centrifuged and the vegetable substance treated in this manner is dried.

7. Process according to claim 1, characterised in that hot pressing is performed in a piston press equipped with a filter cage which allows pressing and filtration to be performed in a single operation.

8. Process according to claim 1, characterised in that pressing is performed in a screw press and, after pressing, the extracted crude oil is clarified by filtration or centrifugation in order to remove suspended vegetable substance residues.

9. Use of a fat treated by the process according to one of claims 1 to 9 as an antioxidant extract for protecting an untreated fat from oxidation, in which the extract contains 0.5 to 7 wt.% of antioxidant and the said extract is added to the fat to be protected in a quantity of 0.2 to 1 wt.%.

10. Use according to claim 9, in which the fat constituting the extract is the same as the fat to be protected.

## Patentansprüche

1. Verfahren zum Schützen eines Fetts gegen Oxidation, bei dem man das zu schützende Fett und ein pflanzliches Material, das phenolische Antioxidantien enthält, bei einer erhöhten Temperatur direkt zusammengibt, dadurch gekennzeichnet, daß das Gewichtsverhältnis Fett/pflanzliches Material 0,5 bis 2,5 beträgt und daß man die Mischung in der Wärme bei einem Druck von mehr als oder gleich 40 bar physikalisch preßt.

2. Verfahren nach Anspruch 1, dadurch gekennzeichnet, daß man als pflanzliches Ausgangsmaterial, das die phenolischen Antioxidatien enthält, Rosmarin oder Salbei verwendet.

3. Verfahren nach Anspruch 1, dadurch gekennzeichnet, daß, das zu schützende Fett ausgewählt ist aus tierischen oder pflanzlichen Fetten, die oxidationsempfindlich sind und ungesättigte Fettsäuren enthalten, insbesondere Hühnerfett, Schweineschmalz und Palmfett.

4. Verfahren nach Anspruch 1, dadurch gekennzeichnet, daß die Mischung von dem pflanzlichen Ausgangsmaterial und dem zu schützenden Fett bei einer erhöhten Temperatur, von 90 bis 120°C, stattfindet.

5. Verfahren nach Anspruch 4, dadurch gekennzeichnet, daß man die Mischung in Gegenwart von Wasser bewirkt und der Mischung 10 bis 20 Gew.-% Wasser, bezogen auf das pflanzliche Material, zugibt.

6. Verfahren nach Anspruch 1, dadurch gekennzeichnet, daß man eine enzymatische Vorbehandlung des Pflanzlichen Materials durchführt, indem man es mit einer Glucanase in wäßrigem Milieu inkubiert, danach die Suspension filtriert oder zentrifugiert und das so behandelte pflanzliche Material trocknet.

7. Verfahren nach Anspruch 1, dadurch gekennzeichnet, daß man das Pressen in der Wärme in einer Kolbenpresse, die mit einem Filterkäfig ausgerüstet ist, durchführt, die die Durchführung des Pressens und der Filtration als eine einzige Operation ermöglicht.

8. Verfahren nach Anspruch 1, dadurch gekennzeichnet, daß man das Pressen in einer Schneckenpresse durchführt und nach dem Pressen das rohe extrahierte Öl so klärt, daß man die suspendierten Rückstände des pflanzlichen Materials durch Filtration oder Zentrifugation entfernt.

9. Verwendung eines nach dem Verfahren nach einem der Ansprüche 1 bis 9 behandelten Fetts als Antioxdans-Extrakt zum Schützen eines nicht behandelten Fetts gegen Oxidation, bei dem der Extrakt 0,5 bis 7 Gew.-% Antioxidans enthält und in einem Verhältnis von 0,2 bis 1 Gew.-% dem zu schützenden Fett zugemischt wird.

10. Verwendung nach Anspruch 9, bei dem das den Extrakt bildende Fett das gleiche ist wie das zu schützende Fett.
